(19) Europäisches Patentamt
European Patent Office
Office européen des brevets

(11) **EP 3 332 949 B1**

(12) **EUROPEAN PATENT SPECIFICATION**

(45) Date of publication and mention
of the grant of the patent:
**23.02.2022   Bulletin 2022/08**

(21) Application number: **17205778.8**

(22) Date of filing: **07.12.2017**

(51) International Patent Classification (IPC):
**B29C 70/38** *(2006.01)*          **G05B 19/4069** *(2006.01)*
**G05B 19/18** *(2006.01)*

(52) Cooperative Patent Classification (CPC):
**B29C 70/38; G05B 19/188; G05B 19/4069;**
G05B 2219/45238

(54) **A METHOD OF CHECKING HEADPATH DATA**

VERFAHREN ZUR ÜBERPRÜFUNG VON BAHN-DATEN EINES ABLEGEKOPFES

PROCÉDÉ DE VÉRIFICATION DE DONNÉES DE TRAJET DE TÊTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.12.2016   GB 201620816**

(43) Date of publication of application:
**13.06.2018   Bulletin 2018/24**

(73) Proprietor: **Rolls-Royce plc**
**London N1 9FX (GB)**

(72) Inventor: **TINGLE, James**
**Derby, DE24 8BJ (GB)**

(74) Representative: **Rolls-Royce plc**
**Intellectual Property Dept SinA-48**
**PO Box 31**
**Derby DE24 8BJ (GB)**

(56) References cited:
**EP-A1- 1 785 261**

• **CG: "Vericut", 20090101 , 1 January 2009
(2009-01-01), pages 1-16, XP007920766,
Retrieved from the Internet:
URL:http://www.cgtech.com/vmg/PDFs/VERICU
T _Brochure_70.pdf**

• **OLSEN H B ET AL: "Automated composite tape
lay-up using robotic devices", PROCEEDINGS
OF THE INTERNATIONAL CONFERENCE ON
ROBOTICS AND AUTOMATION ATLANTA, MAY
2 - 6, 19; [PROCEEDINGS OF THE
INTERNATIONAL CONFERENCE ON ROBOTICS
AND AUTOMATION], LOS ALAMITOS, IEEE
COMP. SOC. PRESS, US, vol. CONF. 10, 2 May
1993 (1993-05-02), pages 291-297, XP010095249,
DOI: 10.1109/ROBOT.1993.292190 ISBN:
978-0-8186-3450-5**

**Description**

The present disclosure concerns a method of checking headpath data for a layup procedure.

It is known to conduct a layup procedure for the manufacture of a composite component by controlling an applicator head configured to apply fibre reinforcement material to move relative a tool to apply fibre reinforcement material onto the tool.

In a previously considered example of a layup procedure, a headpath for a layup procedure comprises a series of points on a surface a tool, and an applicator head is controlled to move relative the tool so that an applicator roller of the applicator head tracks the points defining the headpath.

CGTech Vericut XP007920766 discloses simulation software for simulating a path sequence for an automated lay-up machine. It reads CAD models from path generation applications and simulates them on a virtual machine so as to check for collisions.

EP 1 785 261 discloses a composite part program generator including a computer-aided design (CAD) system interface, a path generator, a course head manager, a postprocessor and a machine simulator. The composite part program generator produces composite part programs for use on a multihead composite material application machine, such as a composite tape lamination machine or an automated fiber placement (AFP) machine, to manufacture a complex composite parts, including relatively flat, contoured, or generally cylindrical composite parts.

According to a first aspect there is provided a computer-implemented method of checking headpath data for a layup operation in which fibre reinforcement material is applied over a tool by an applicator roller of an applicator head biased against the tool along a compaction axis by a compaction force, the applicator head being mounted on a support by a resilient mount so that it is translatable with respect to the resilient mount along the compaction axis, the method comprising: receiving baseline headpath data defining a baseline headpath position of the applicator head relative the tool for applying fibre reinforcement material onto a substrate surface by the applicator roller; determining a head displacement relative to the respective headpath positions along the compaction axis corresponding to an equilibrium condition between the compaction force and a reaction force through the fibre reinforcement material applied by the applicator roller; and checking for at least one of: a non-compacted portion of fibre reinforcement material along a lateral extent of the applicator roller based on a deformation profile of the applicator roller at the equilibrium condition; and an intersection of the applicator head and an obstacle, based on the head displacement distance.

The baseline headpath position may be a position on a notional tool surface which defines a contact position of the applicator roller in an un-deformed configuration. In other words, the baseline headpath position may be a point for controlling the orientation (or position) of the applicator head so that the applicator roller would contact the notional tool surface at the baseline headpath position. For example, based on the baseline headpath position, the applicator head may be positioned so that the compaction axis intersects the baseline headpath position and so that the baseline headpath position is at a mid-point along a line of travel of the applicator roller (i.e. the range of movement of the applicator roller along the compaction axis), in particular the line of travel of a distal end of the applicator roller (the end farthest from a body of the applicator head) in an un-deformed configuration. The head displacement may correspond to (be equivalent to) the displacement of a roller axis of the applicator roller from a notional position of the roller in the un-deformed configuration in which it is in contact with the baseline headpath position, and an equilibrium position of the roller in a deformed configuration to press fibre reinforcement material against the substrate surface offset from the notional tool surface.

The applicator roller may be deformable (in other words, compressible or crushable) along its lateral extent. In its un-deformed configuration, the roller may be substantially cylindrical.

The method may further comprise simulating the substrate surface, for example, based on a headpath data defining how fibre-reinforcement is to be applied on the tool to progressively form the substrate.

The method may further comprise: determining an intersection of the applicator head in the baseline headpath position and an obstacle. An offset headpath position offset from the baseline headpath position may be defined to avoid the intersection. Production headpath data may be defined for a layup operation including the offset headpath position.

The intersection may be determined based on a geometry of the applicator head and a geometry of one or more obstacles, for example including the tool, a substrate applied on the tool (i.e. a pre-form, partially or fully applied), supports for the applicator head or the tool, and ancillary equipment such as vacuum bagging apparatus and heaters. The geometry of the applicator head may be relatively translatable and rotatable with respect to the geometry of the or each obstacle, for example, there may be six degrees of freedom for simulating their relative positions.

The method may comprise determining a non-compacted portion of fibre reinforcement material based on the deformation profile of the applicator roller at the equilibrium condition. An offset headpath position offset from the baseline headpath position may be defined based on the location of the non-compacted portion to laterally offset a centre of the applicator roller from a position on the substrate surface corresponding to the non-compacted portion. Production headpath data may be defined for a layup operation including the offset headpath position.

The lateral direction may be the binormal direction (or binormal vector) of a headpath over a substrate surface corresponding to the tool, the headpath having a headpath direction along which fibre reinforcement material is to be applied and passing through the baseline headpath position. For the avoidance of doubt, a binormal vector is a vector orthogonal to both a tangent vector of a curve and a normal vector of the curve.

The offset headpath position may be defined to inhibit non-compaction of fibre-reinforcement material along the lateral extent of the applicator roller. For example, non-compaction may occur owing to bridging of the applicator roller over a feature of a substrate surface - for example a local depression of the substrate surface. Defining the offset headpath position to be laterally offset from the baseline headpath position so that a centre of the applicator roller is laterally offset from the position on the substrate surface corresponding to non-compaction (e.g. the position of the respective feature) may cause either (i) the applicator roller to avoid (i.e. pass by) the respective position on the substrate surface to avoid non-compaction or (ii) the position on the substrate surface to move relatively towards an end region of the applicator roller. End regions of the applicator roller may be more flexible/deformable and/or less susceptible to bridging.

The centre of the applicator roller may be a lateral centre, such as a midpoint along the lateral extent of the applicator roller (e.g. on the roller axis or along the distal end of the applicator roller).

The method may further comprise repeating checking for a non-compacted portion of fibre reinforcement material and/or an intersection of the applicator head and an obstacle at the offset headpath position.

The offset headpath position may be iteratively defined. The offset headpath position may be defined by offsetting or deflecting a headpath for relative movement of the applicator head relative the tool.

The method may further comprise determining a non-compacted portion of fibre reinforcement material based on the deformation profile of the applicator roller at the equilibrium condition. Production headpath data may be defined for a layup operation including the baseline headpath position. The production headpath data may define a reduced lateral extent of fibre reinforcement to be applied at the baseline headpath position to exclude the non-compacted portion.

The production headpath data may be defined for a layup operation in which a plurality of laterally-adjacent tows are applied by the applicator roller. At least one tow may be determined to be non-compacted based on the deformation profile of the applicator roller at the equilibrium condition. The production headpath data may be defined to exclude at least one tow at the baseline headpath position.

A non-compacted portion may be determined when a corresponding portion of the deformation profile of the applicator roller is non-physical, or when a reaction force through the corresponding portion of the deformation profile is below a predetermined threshold.

The predetermined threshold may define a minimum force required for adequate compaction of fibre-reinforcement material. For example, the predetermined threshold may correspond to force per tow of 30N.

The deformation profile at the equilibrium condition may be determined by mapping the lateral profile of the applicator roller to the substrate surface. The equilibrium condition may be resolved to determine the head displacement by determining the reaction force through the fibre reinforcement material as a function of the deformation profile.

The reaction force through the fibre reinforcement material may be determined based on an iteratively-adjusted compaction profile defining regions of compaction of the fibre reinforcement material by the applicator roller along the lateral extent of the applicator roller. The compaction profile may be iteratively adjusted to exclude regions of non-physical deformation of the applicator roller to compact the fibre reinforcement material. Checking for a non-compacted portion of fibre reinforcement material may be based on the compaction profile. The reaction force through the fibre reinforcement material may be determined based on a correlation between deformation of the applicator roller and the reaction force which varies laterally along the applicator roller.

According to a second aspect there is provided a method of defining headpath data including a plurality of headpath positions defining a headpath of relative movement of an applicator head relative a tool to apply fibre reinforcement material onto a substrate surface by an applicator roller of the applicator head. According to the second aspect the headpath data for at least one of the headpath positions is checked and defined in accordance with the first aspect of the invention when a non-compaction of fibre reinforcement material is determined based on the deformation profile of the applicator roller at the equilibrium condition, and when production headpath data is defined for a layup operation including the baseline headpath position, wherein the production headpath data defines a reduced lateral extent of fibre reinforcement material to be applied at the baseline headpath position to exclude the non-compacted portion. According to the second aspect, a lateral extent of fibre-reinforcement material to be applied varies along the headpath.

It will be appreciated that a baseline headpath position may be defined as the result of previous iterations and adjustments (e.g. to offset a pre-existing headpath position).

According to a third aspect there is provided a non-transitory computer-readable storage medium comprising computer-readable instructions that, when executed by a processor, causes performance of a method in accordance with the first or second aspects.

According to a fourth aspect, there is provided a signal comprising computer-readable instructions that, when executed by a processor, causes the performance of a method in accordance with the first or second aspects.

According to a fifth aspect, there is provided a computer program that, when read by a computer, causes performance of a method in accordance with the first or second aspects.

According to a sixth aspect, there is provided an apparatus comprising: at least one processor; at least one memory comprising computer-readable instructions; wherein the at least one processor is configured to read the computer readable instructions and cause performance of a method in accordance with the first or second aspects.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

The invention will now be described by way of example only, with reference to the Figures, in which:

Figure 1 is a schematic perspective view of a an applicator head applying fibre reinforcement material on a tool;

Figure 2 is a schematic cross-sectional view of an applicator roller applying fibre reinforcement material on a substrate received on a tool;

Figure 3 is a diagrammatic view of an applicator roller in a deformed configuration showing roller crush and head displacement dimensions;

Figure 4 is a diagrammatic view of the applicator roller of Figure 4 showing force balance in an equilibrium condition;

Figure 5 is a plot showing reaction force profiles at different tow positions as a function of applicator roller deformation;

Figure 6 is a flowchart of a method of checking headpath data;

Figure 7 is a flowchart showing a method of determining head displacement of an applicator head;

Figure 8 is a plot showing tow compaction force, surface and roller profiles for an example substrate surface feature which is generally concave;

Figure 9 is a plot showing tow compaction force, surface and roller profiles for an example substrate surface feature which is generally convex;

Figure 10 is a flowchart showing an example method of checking and defining headpath data;

Figure 11 is a flowchart showing an example method of checking and defining headpath data;

Figure 12 schematically shows a controller for executing a method of checking and optionally defining headpath data; and

Figure 13 schematically shows a computer-readable medium comprising instructions and a processor.

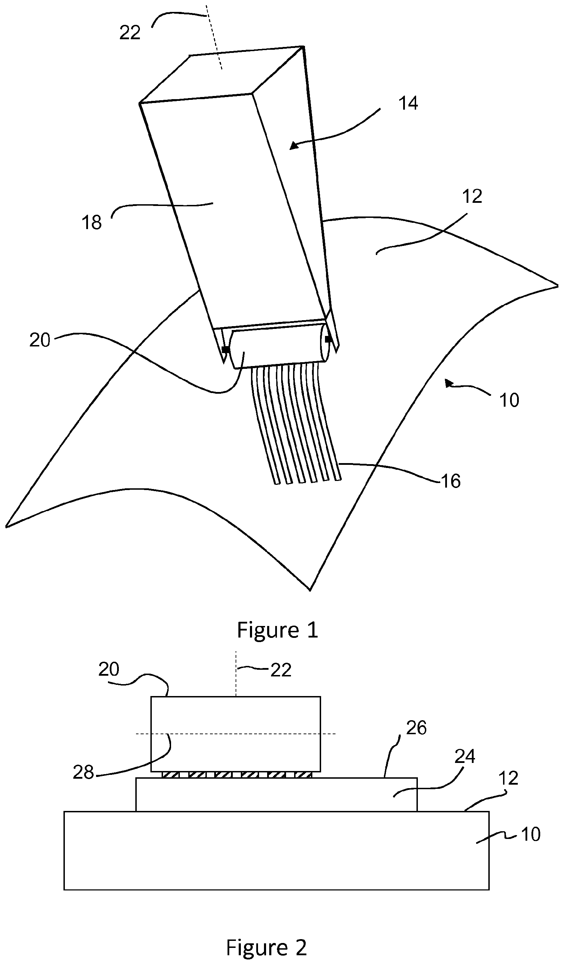

Figure 1 shows an example tool 10 defining a lay-up surface 12, and an example applicator head 14 disposed over and moveable relative the tool 10 to apply a plurality of tows 16 of fibre reinforcement material onto the lay-up surface 12. The applicator head 14 comprises a head body 18 extending along a generally longitudinal direction and supporting an applicator roller 20 at its distal end configured to traverse the lay-up surface 12 to apply fibre reinforcement material thereto.

As shown in Figure 1, in this example the head body 18 extends along a generally longitudinal axis from a proximal end farthest from the tool to a distal end where the applicator roller 20 is located for pressing against the tool 10.

The applicator head 14 and tool 10 are moveable relative one another in six degrees of freedom including three degrees of translation and three degrees of rotation. In this particular example, the degrees of freedom are distributed between the tool and the head, such that the tool 10 and applicator head 14 are both configured to move (with respect to different degrees of freedom). For example, the tool 10 may be configured to rotate about two rotational axis of freedom (e.g. pitch and roll) and one translational degree of freedom (e.g. a vertical or "z" direction, whereas the applicator head 14 may be mounted to a support (not shown) and configured to move with respect to the remaining rotational degree of freedom (e.g. "yaw") and translational degrees of freedom (the lateral or "x" and "y" directions). In other examples, the tool 10 may be configured to remain static whereas the applicator head 10 may be mounted to a support (not shown) configured to manipulate the applicator head 10 with up to six degrees of freedom. In yet further examples, the applicator head 14 may remain static and the tool 10 may be configured to move relative the applicator head 10. , but in other examples the degrees of freedom may be distributed between the tool and head in any combination.

The applicator head 14 is mounted to the support by a resilient mount so that it is translatable with respect to the resilient mount along a compaction axis in response to engaging the tool 10 or a substrate received on the tool 10. For example, the resilient mount may comprise a rail configured to support the applicator head and allow relative movement of the applicator along the compaction axis 22 relative the rail. The resilient mount may be coupled to the support so that translational and rotational manipulation is imparted to the applicator head 14 via the resilient mount, separately to the freedom of the applicator head to translate along the compaction axis 22 relative the resilient mount.

The resilient mount defines a travel (i.e. a finite range of linear movement) of the applicator head 14 along the compaction axis 22, and is provided with a biasing mechanism to urge the applicator head 14 along the compaction axis relative the resilient mount towards the tool 10. For example, the travel may be between 5mm and 20mm and may depend on the geometry of the tool and component to be formed. In this particular example, the biasing mechanism comprises compressed gas apparatus including a reservoir of compressed gas, a pressure-maintaining valve, and a pneumatic actuator for driving the applicator head 14 along the compaction axis 22. The reservoir of compressed gas is provided so that a compaction pressure or compaction force (for example, approximately 500N to 1000N) acting on the applicator head 14 along the compaction axis 22 remains substantially constant irrespective of the position of the applicator head 14 within its travel.

**Figure** 2 shows a partial cross-sectional view of the tool 10 with a substrate 24 received on the lay-up surface 12 of the tool 10. In this example, the substrate 24 is a partially laid pre-form for a composite component, comprising a plurality of successive plies of fibre reinforcement material received on the lay-up surface 12.

As shown schematically in Figure 2, the applicator roller 20 is positioned over the substrate 24 and tool 10 to press a plurality of tows 16 against a substrate surface 26 of the substrate 24 during a layup operation. The applicator roller 20 has a roller axis 28 about which it is rotatable to move over the substrate surface 26 to apply the tows of fibre reinforcement material thereto. In this example, the roller axis 28 is orthogonal with respect to the compaction axis 22, but in other examples the roller axis 28 may be pivotable to become inclined relative the compaction axis. For example, there may be an amount of play for pivoting the roller axis 28 about a third axis orthogonal to both the compaction axis 22 and the roller axis 28 as shown in Figure 2.

The applicant has previously utilised methods of laying up fibre reinforcement material in which an applicator head is controlled to position a centre point of an applicator roller against a series of headpath points. The centre point of the applicator roller may be defined as a point on the distal line or surface of the applicator roller in an un-deformed configuration (i.e. the most distal line on the substantially cylindrical roller surface which presses against a tool), and at a central position with respect to the lateral extent of the applicator roller. In some example methods, the applicator head may have a compaction axis as described above which may extend through the distal line or surface of the applicator roller and be centrally aligned so that the centre point can be defined as where the compaction axis intersects the distal line or surface of the applicator roller.

The applicant has found that the headpath points may not correspond directly with a substrate surface to which fibre reinforcement material is to be applied during a layup procedure. For example, the substrate surface may be an exposed surface of a partially-formed pre-form for a composite component, and the headpath point may correspond to the underlying tool surface.

It will be appreciated that where the applicator head is not resiliently moveable along the compaction axis, any inaccuracy in the definition of the headpath point will result in the applicator roller not contacting the substrate surface if the headpath point is set too high (i.e. outside of the true substrate surface), or being driven into the substrate surface (i.e. colliding) if the headpath point is set too low (i.e. within or below the true substrate surface). In the latter case, small tolerances may be accommodated in practice by deformation of a deformable applicator roller, where provided.

In example methods where the applicator head is biased along a compaction axis, discrepancies between the headpath point and the true substrate surface may be accommodated if a travel of the applicator head along the compaction axis is sufficiently high. A bias of the applicator head along a compaction axis may therefore allow for improved reliability in compacting fibre reinforcement material against a substrate surface. Nevertheless, lay-up defects (non-conformance) such as non-compaction of fibre-reinforcement material and collisions between the applicator head and an obstacle may arise.

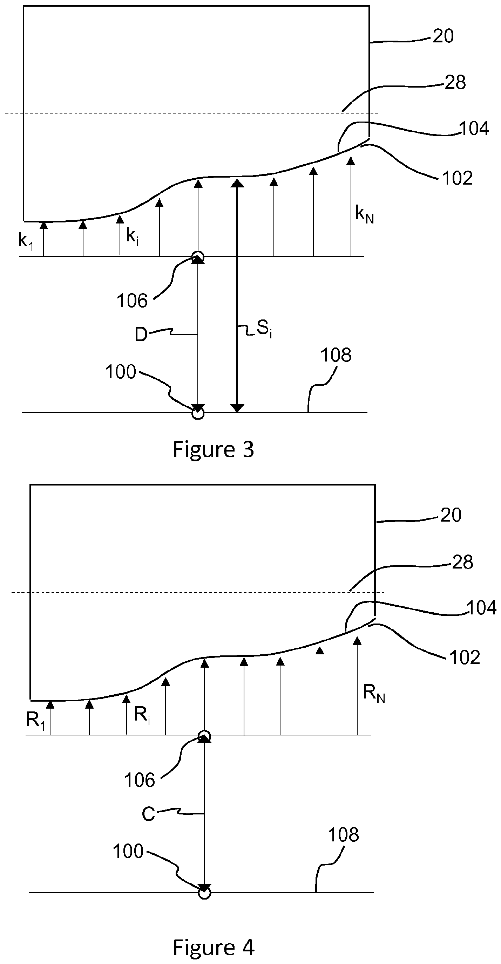

As will now be described with respect to Figures 3-9, the applicant has developed methods of checking and of defining headpath data based on determining the displacement (compaction) of the applicator head 14 along the compaction axis 22 relative respective headpath positions.

As will be described in detail below, determining the displacement of the applicator head allows the position of the applicator head to be predicted, which may enable any collision with an obstacle to be predicted. Further, the methods provide for determining a deformed profile of the applicator roller, which may enable non-compaction of fibre-reinforcement material to be predicted. Non-compaction of fibre-reinforcement material may lead to lay-up defects, such as bridging of fibre reinforcement material over depressions (or recesses) in the substrate surface 26, or inadequate application of force or pressure for adhesion and/or frictional resistance to displacement of the fibre reinforcement material during a layup operation.

**Figure 3** and **Figure 4** respectively show diagrams of force balance and displacement of the applicator roller 20 for a respective headpath position.

In this example, a notional or virtual headpath position 100 is defined corresponding to a position on a notional or virtual tool surface. In this example, a substrate is simulated as applied on the virtual tool surface to define a substrate surface 102, which is shown in Figures 3 and 4 having a variable profile offset from the virtual headpath position 100.

As will be appreciated, in use the applicator head 14 is positioned to direct the centre point of the applicator roller 20 to the virtual headpath position 100. In this particular example, the applicator head 14 is positioned so that it would be at a mid-position (i.e. the central position) within the travel of the applicator head 14 when the centre point of the applicator roller is at the virtual headpath position 100 in an un-deformed configuration. Positioning the applicator head 14 in this way may allow for retraction and extension of the applicator head.

As shown in Figure 3, if the applicator roller 20 is assumed to deform to correspond to the profile of the substrate surface 102, then a deformation profile 104 of the applicator roller 20 along the lateral extent of the applicator roller at its distal line or surface will correspond to the profile of the substrate surface 102. The deformation k along the profile is variable and is shown as discretized for a plurality of tows $i$, from $k_1$ to $k_N$ where N is the number of tows 16 to be applied. The deformation k is between the deformation profile of the applicator roller and the un-deformed profile of the roller. The centre point 106 (a point on the un-deformed distal line or surface at a central lateral position) is shown to illustrate the un-deformed profile of the applicator roller 20.

The separation between the centre point 106 and the virtual headpath position 100 represents the displacement D of the applicator head 14 along the compaction axis 22.

Figure 3 also shows a displaced deformation s of the applicator roller 20. The displaced deformation s is equivalent to the cumulative displacement and deformation of the applicator roller 20 as measured from the virtual headpath position 100 (i.e. an un-deformed configuration of the roller 20) to the deformation profile 104 of the applicator roller, along a direction parallel with the compaction axis 28. In particular examples, and as with the deformation k, the displaced deformation s may be discretized in accordance with the number of tows $i$ to be applied along the lateral extent of the roller.

The displaced deformation $s_i$ for each tow position may be calculated by determining the separation between the respective portion of the deformation profile 104 of the applicator roller and the binormal vector 108 corresponding to the virtual headpath position 100. For the avoidance of doubt, a binormal vector is a vector orthogonal to both a tangent vector of a curve and a normal vector of the curve. The binormal vector 108 with respect to the virtual headpath position 100 may be determined as orthogonal to a tangent vector of the headpath extending through successive virtual headpath positions 100, and orthogonal to the normal vector of the virtual tool surface at the virtual tool path position. In examples described herein, the applicator head 14 may be positioned so that the compaction axis 22 aligns with the normal vector of the virtual tool surface at the virtual headpath position. However, in other examples the compaction axis 22 may be controllably and variably inclined with respect to the normal vector, for example, in a range of up to 30° (this may be useful to avoid an obstacle).

**Figure 4** shows a force balance diagram for the applicator roller in an equilibrium condition in which a compaction force C applied through the applicator head 14 is equal to the sum of the reaction forces $R_i$ through respective portions (in examples herein, respective tows 16) of fibre reinforcement material when the applicator roller 20 is deformed to correspond to the profile of the substrate surface 102. The force balance can be represented mathematically as shown in Equation 1.

$$\sum_{i=1}^{N} R_i = C$$

**Equation 1**

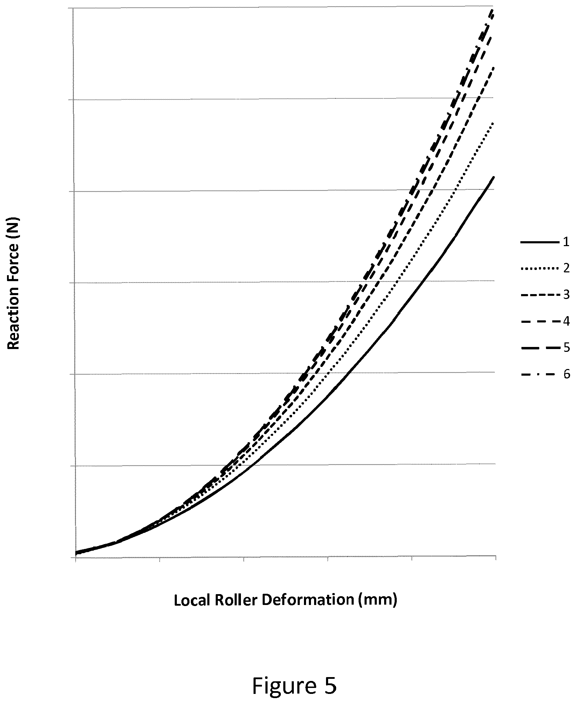

In examples described herein the reaction force $R_i$ is dependent on the local deformation of the applicator roller 20 in a non-linear manner, as shown in **Figure 5**. Further, in examples described herein the reaction force $R_i$ is dependent on the lateral position along the applicator roller (again, as shown in Figure 5). For example, the applicator roller may be more resistant to deformation at a central position along its lateral extent (e.g. owing to support by laterally adjacent portions of the roller), and less resistant to deformation towards its lateral ends. Figure 5 shows the profile of reaction force with respect to local roller deformation for different tow positions, wherein tow 1 represents a tow position towards a lateral end of the applicator roller, and wherein tow 6 represents tow position laterally adjacent the centre point 106 of the applicator roller.

The profiles of reaction force can be determined empirically by testing as a function of local roller deformation and, optionally, tow position. In other examples the profiles of reaction force may be determined or calculated based on a theoretical model.

In the particular examples described herein, the profiles of reaction force at the respective tow positions are determined empirically to derive a numerical correlation (i.e. one which can be expressed as a algebraic formula), in particular a quadratic equation, for each tow position $i$, as shown in equation 2.

$$\boldsymbol{R}_i(i, \kappa) = a_i\kappa_i^2 + b_i\kappa_i + c_i$$

## Equation 2

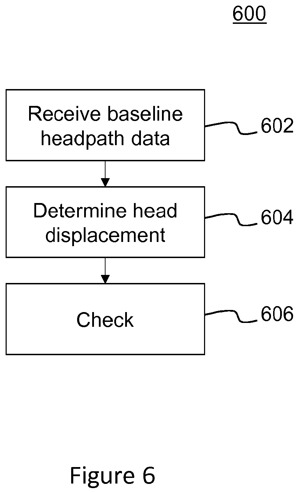

A particular example method of checking headpath data will now be described, by way of example only, with reference to Figures 6-8 and based on the descriptions of the apparatus displacements and force balance provided above with respect to Figures 1-5.

Figure 6 shows a flowchart of a method 600 of checking headpath data for layup operation in which fibre reinforcement material is applied over a tool 10 by an applicator roller 14 biased against the tool along a compaction axis 22 by a compaction force C, as described above with respect to Figures 1-4.

In block 602, baseline headpath data is received, for example from a headpath datafile stored in a memory of a computer. In this example, the baseline headpath data defines baseline headpath positions for positioning the applicator head 14 relative the tool.

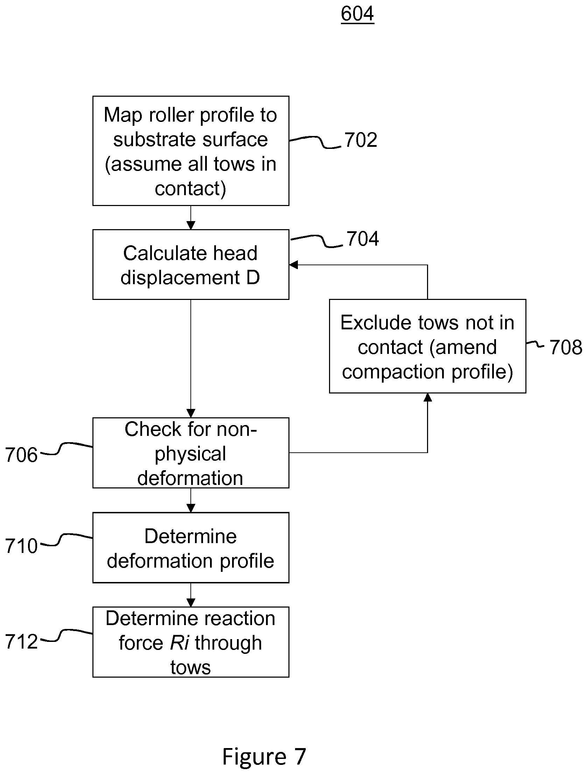

In block 604, the headpath displacement D of the applicator head 14 at the baseline headpath position is determined based on evaluating an equilibrium condition between the compaction force C and a reaction force through the fibre reinforcement material 16, as will be described in detail below with respect to Figure 7.

In block 606, a check is conducted for at least one of a non-compacted portion of fibre reinforcement material 16 along a lateral extent of the applicator roller; and an intersection of the applicator head 14 and an obstacle, based on the head displacement.

In this particular example, both checks are conducted. The check for a non-compacted portion of fibre reinforcement material 16 is conducted based on the deformation profile of the applicator roller at the equilibrium condition, as will be described in detail below with respect to Figure 7.

The check for an intersection of the applicator head 14 and an obstacle is conducted by simulating the geometry of the applicator head 14 relative an obstacle or set of obstacles. In this example, the set of obstacle includes the tool 10, a substrate 24 received on the tool 10 (e.g. a partially-formed pre-form for a composite component as applied onto the tool 10), support equipment for the applicator head 14 and the tool 10, and any ancillary equipment for example vacuum bagging equipment (not shown). By first determining the head displacement D, the position of the applicator head 14 relative the tool 10 (and other obstacles, accordingly) can be accurately predicted.

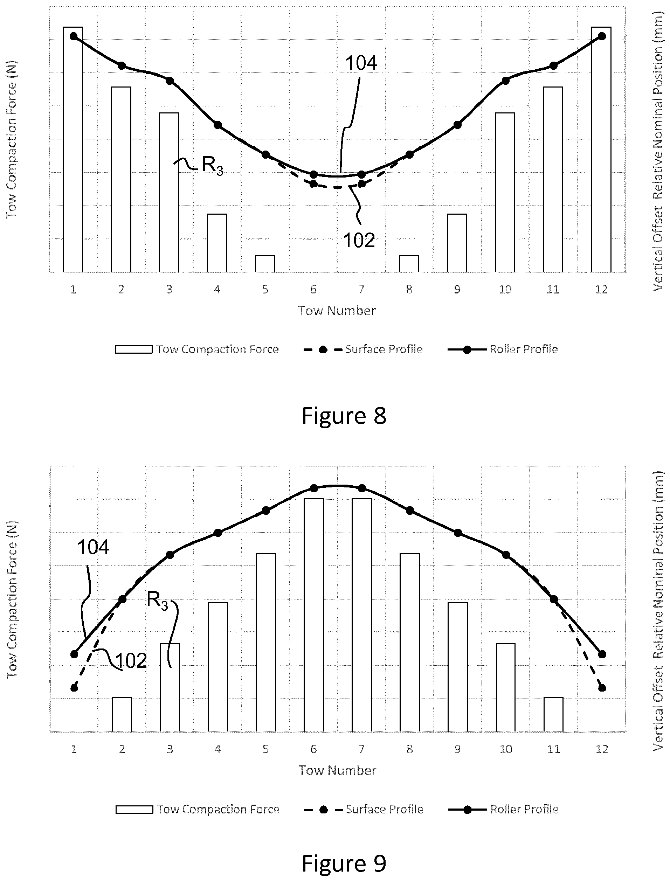

**Figure 7** shows a flowchart of a sub-method 604 of determining the head displacement D (corresponding to block 604 of Figure 6). The sub-method will be described by reference to an example substrate surface profile 102 as shown in **Figure 8.**

Figure 8 shows a combination plot depicting a profile of a substrate surface 102 (data series "Surface Profile"). In the examples described herein, the substrate surface 102 is a surface that is simulated, for example by a processor of a computer conducting the method 600. The substrate surface 102 may correspond to a lay-up surface of the tool 10 when the respective headpath position corresponds to a headpath to be laid directly onto the tool 10, or may correspond to an exposed (or upper) surface of a substrate 24 simulated as applied on the tool. For example, for a headpath position corresponding to an intermediate-depth ply of a pre-form for a composite component, the substrate 24 may be simulated as applied on the tool up to the respective headpath position.

As shown in Figure 8, in this example the surface profile 102 is substantially identical to a deformation profile 104 (data series "Roller Profile") of the applicator roller 20 for all but a central portion of the surface profile corresponding to tow positions 6 and 7.

Referring back to Figure 7, in block 702 of the sub-method 604, the profile of the roller (i.e. the deformation profile 104) is mapped to the profile of the substrate surface to reflect an assumption that the roller 20 can deform to compact all tows 16 to be applied along the lateral extent of the roller. Accordingly, in block 702, the deformation profile 104 of the roller is set to match the surface profile 102 of the substrate surface. This initial condition is contrary to what is shown in Figure 7 with respect to the central tow positions (positions 6 and 7), for reasons that will become clear in the following description.

In block 704, the head displacement $D$ is determined based on evaluating an equilibrium condition of the roller 20 when the reaction force through fibre reinforcement material compacted by the roller 20 is equal to the compaction force C which biases the applicator head 14 (including the roller 20) against the tool 10. In this particular example, the reaction force $R_i$ through respective tows 16 at tow positions $i$ can be determined based on the relationships as previously described with respect to Equations 1 and 2 and Figure 5, and will now be described with reference to the diagrammatic illustrations of force balance, displacement and deformation of Figures 3 and 4..

Since the roller deformation $k_i$ for each tow position $i$ is equal to the displaced deformation $s_i$ for the respective tow less the head displacement $D$ (i.e. $k_i = s_i - D$), an equilibrium equation balancing the sum of the reaction forces $R_i$ and the head compaction force $C$ can be re-arranged as shown below in Equation set 3.

$$\sum\nolimits_{i=1}^{N} a_i \kappa_i^2 + b_i \kappa_i + c_i = \textbf{\textit{C}}$$

$$\sum\nolimits_{i=1}^{N} a_i (s_i - D)^2 + b_i (s_i - D) + c_i = \textbf{\textit{C}}$$

$$\sum\nolimits_{i=1}^{N} a_i s_i^2 - 2a_i s_i D + a_i D^2 + b_i s_i - b_i D + c_i = \textbf{\textit{C}}$$

$$\sum\nolimits_{i=1}^{N} a_i D^2 + (-2a_i s_i - b_i)D + (a_i s_i^2 + b_i s_i + c_i) = \textbf{\textit{C}}$$

$$D^2 \sum\nolimits_{i=1}^{N} a_i + D \sum\nolimits_{i=1}^{N} (-2a_i s_i - b_i) + \sum\nolimits_{i=1}^{N} (a_i s_i^2 + b_i s_i + c_i) - \textbf{C} = 0$$

## Equation Set 3

The final equation in equation set 3 is a quadratic equation that is a function of D, and therefore D can be solved for using the quadratic formula as shown in Equation 4 (noting that, in this particular example a positive solution is physical and a negative solution would be non-physical).

$$D = \frac{\sum_{i=1}^{N}(2a_i s_i + b_i) - \sqrt{(\sum_{i=1}^{N}(2a_i s_i + b_i))^2 - 4\sum_{i=1}^{N} a_i \left(\sum_{i=1}^{N}(a_i s_i^2 + b_i s_i + c_i) - \textbf{C}\right)}}{2\sum_{i=1}^{N} a_i}$$

## Equation 4

Based on the head displacement D and the displaced deformation $s_i$ at each tow position, the respective deformations $k_i$ at the tow positions can be determined based on Equation 5.

$$\kappa_i = s_i - D$$

## Equation 5

In block 706, it is determined whether the deformation $k_i$ for each tow position is negative, such that the deformation at the respective tow position would be determined as non-physical. When the deformation $k_i$ is negative, an extension of the roller 20 is implied from its un-deformed configuration, rather than a depression (or crush) of the roller 20.

If it is determined that the deformation $k_i$ for any of the tow positions is negative, then in block 708 a compaction profile of the applicator roller, initially assumed to represent compaction of fibre reinforcement material along the full lateral extent of the roller (as described above), is adjusted to exclude tows determined to be non-compacted for reason of non-physical deformation.

The head displacement $D$ is then recalculated in block 704 as described above, based on the adjusted compaction profile.

In this particular example, and as shown in Figure 8, the initial calculation of the head displacement $D$ results in non-physical compaction of the roller 20 at tow positions 6 and 7, as determined in block 706, such that the compaction profile is adjusted at these tow positions in block 708 and the head displacement $D$ is recalculated at block 704.

In this example, after a second calculation of the head displacement $D$ the deformation profile 104 of the roller 20 is found to be physical (rather than non-physical or degenerate) at all tow positions $i$ in block 706. In block 710, the deformation profile 104 of the applicator roller 20 is stored as correlated to the respective headpath position, for example in a memory of a computer, for later retrieval.

In block 712, the reaction force $R_i$ imparted on the applicator roller 20 through the each of the respective tows 16 at the tow positions $i$ is determined based on Equation 6.

$$\boldsymbol{R}_i(i, \kappa) = a_i \kappa_i^2 + b_i \kappa_i + c_i$$

**Equation 6**

The reaction force $R_i$ for the example described above with respect to Figure 8 is shown in Figure 8 for the respective tow positions. It can be seen that the reaction force is at a peak for those lateral portions of the applicator roller which are most severely deformed (crushed) to conform to the substrate surface profile 102, in particular, at the lateral end regions of the applicator roller. The reaction force reduces as the deformation $k$ reduces, and is zero where the deformation profile 104 of the roller 20 departs from the substrate surface profile 102 such that there is non-compaction of a corresponding portion of fibre-reinforcement material (i.e. at tow positions 6 and 7).

Referring back to Figure 6, the check in block 606 for non-compaction of fibre-reinforcement material is conducted in this example based on comparing the deformation profile 104 of the roller 20 with the substrate surface profile 102, such that non-compaction is determined to be present where the deformation profile 104 as stored in memory differs from the substrate surface profile. In other examples, non-compaction of fibre reinforcement material may be determined based on the compaction profile, which is determined in block 706 of the sub-method 604 of determining the head displacement $D$ based on the deformation profile 104 of the applicator roller.

Although the above example of checking headpath data is described with respect to a single baseline headpath position, it will be appreciated that in other examples headpath data defining a series of baseline headpath positions can be checked.

**Figure 9** shows a further example of deformation of the applicator roller 20 to conform to a substrate surface profile 102 at a second baseline headpath point. In this example, the substrate surface profile 102 is generally convex. During calculation of the head displacement D, it is determined that there is non-physical deformation at tow positions 1 and 12 at the lateral ends of the applicator roller 20, such that these tow positions are excluded from the reaction force calculations and the compaction profile is adjusted accordingly, as described above.

In the above described examples, methods of checking headpath data enable feedback to be generated (for example, within a headpath validation or design procedure) as to non-compaction or collision. Example methods will now be described in which headpath data is defined based on the above-described methods of checking headpath data.

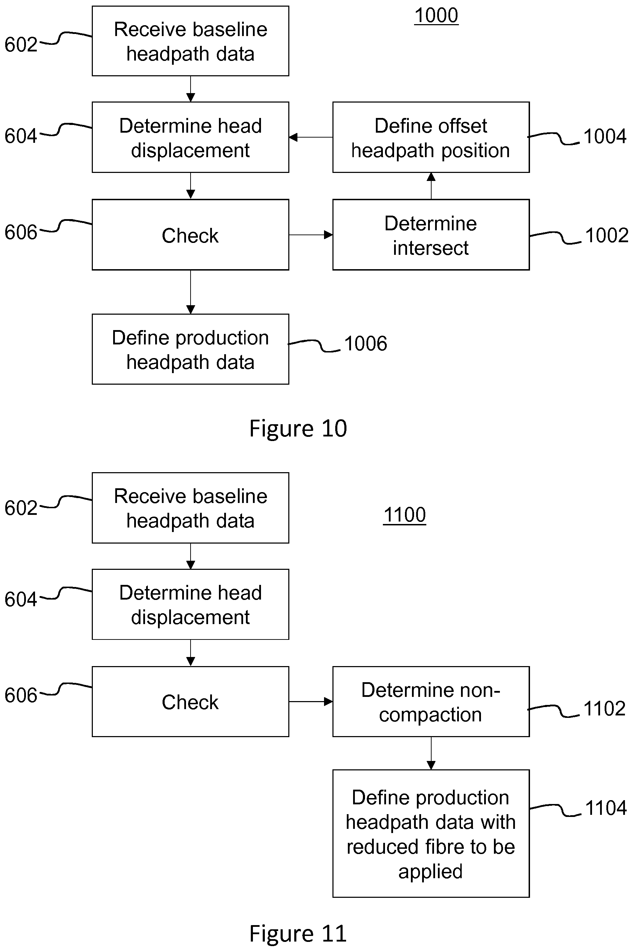

**Figure 10** shows an example method 1000 of checking and defining headpath data in which baseline headpath data defining a baseline headpath position 100 is received (block 602), head displacement is determined (block 604), and checks performed (block 606) in accordance with the method 600 described above with respect to Figures 6 and 7.

In this example, an intersection is determined in block 1002 based on a check for intersections (otherwise known as collisions) in block 606. For example, the intersection may be between a portion of the applicator head and a part of the tool 10. Such intersections may be particularly prone to occur for highly curved tool and substrate geometries, or for small parts.

In block 1004 an offset headpath position is defined based on the baseline headpath position. The head displacement $D$ is then re-determined in block 604 and the checks repeated for the offset headpath position in block 606. This loop may be repeated until the or each check is clear (i.e. no intersection/collision is detected, and/or no non-compacted portion of fibre reinforcement material). In block 1006, production headpath data (i.e. headpath data for a lay-up procedure) is defined based on the offset headpath position.

The offset headpath position may be defined to avoid an intersection which is detected. For example, an intersection may be detected between the applicator head 14 and an obstacle, and the offset headpath position may be defined to translate the applicator head 14 relative the obstacle to avoid the obstacle.

The offset headpath position may be defined as part of defining an offset headpath. For example, a portion of a baseline headpath comprising a plurality of baseline headpath positions for which one or more non-conformance checks return a positive result (e.g. a collision or non-compaction of fibre-reinforcement material) may be replotted by offsetting the baseline headpath to define an offset headpath. The offset headpath, or the individual offset headpath position may be defined automatically based on an offsetting procedure of the computer program, or may be semiautomatically defined by highlighting the location of non-conformance (e.g. a collision or non-compaction of fibre-reinforcement material), and providing a prompt for user input to offset the baseline headpath or the baseline headpath position (for example, by clicking and dragging a baseline headpath position over a virtual tool surface 100).

**Figure 11** shows a further example method 1100 of checking and defining headpath data.

As previously described with respect to Figure 10, the method comprises receiving baseline headpath data defining a baseline headpath position (block 602), determining head displacement $D$ (block 604) and conducting non-conformance or validation checks (block 606).

In this example method, in block 1102 a portion of non-compacted fibre reinforcement material is determined. In this example, non-compaction is determined based on the compaction profile of the applicator roller 20 which is iteratively adjusted during the determination of the deformation profile of the applicator roller 20 and the head displacement $D$ as described above.

In this example, the portion of non-compacted fibre reinforcement material is determined by identifying tow positions where non-compaction occurs. Considering the substrate surface of Figure 9 as an example, non-compaction would be determined in block 1102 for tow positions 1 and 12.

In other examples, non-compaction may be determined over a portion of fibre reinforcement material provided as a tape (as in Automatic Tape Laying (ATL) processes), or as a bundle of fibres (as in Automatic Filament Winding), and the lateral extent of fibre reinforcement material to be applied by the applicator roller may be discretized accordingly, for example in portions of a predetermined width.

In block 1104, production headpath data is defined based on the baseline headpath data so that the lateral extent of fibre reinforcement material to be applied is reduced, relative a default or standard lateral extent.

The default or standard lateral extent may be a maximum lateral extent of fibre-reinforcement material that can be applied by the applicator roller or which is selected as a maximum for application in the definition of the baseline headpath data. The standard lateral extent may correspond to a maximum lateral extent as determined along the production headpath, such that the lateral extent varies along the headpath.

In this particular example, baseline headpath data is received which specifies that 12 tows are to be applied along the headpath. In this example, in block 1104 the production headpath data is defined to exclude tows in tow positions 1 and 12 from being applied during the lay-up procedure, so as to avoid non-compaction of fibre reinforcement material.

It will be appreciated that the production headpath data may be defined so that each tow has a minimum elongate extent as applied, and therefore any instructions to defined the production headpath data may include procedures for determining the lateral extent to be applied at a particular headpath position based on the lateral extent to be applied at other headpath positions.

In some examples, where non-compaction is determined, the lateral extent will be reduced accordingly over a headpath portion corresponding to a plurality of successive headpath positions, even if non-compaction is only determined at a subset, which may be one, of the headpath positions. This may avoid discontinuities in the lateral extent of fibre-reinforcement material to be applied. This may be particularly appropriate where non-compaction is determined towards a lateral end of the applicator roller.

In other examples, a new offset headpath position (or offset headpath) may be defined when non-compaction is determined so that the centre point of the applicator roller 20 is moved relative a feature of the substrate surface corresponding to the non-compaction of fibre-reinforcement material. In some examples, the applicator roller may be offset so that, at the offset headpath position the applicator roller does not engage the respective feature of the substrate surface. In other examples, the applicator roller may be offset in the offset headpath position so that the respective feature of the substrate surface moves relatively away from the centre point of the applicator roller and towards a lateral end of the applicator roller. To take an example, considering the generally concave substrate surface 102 described with reference to Figure 8, non-compaction at central tow positions (tow positions 6 and 7) may result in offsetting the baseline headpath position laterally to define an offset headpath position which results in the respective substrate surface feature underlying tow path positions 1 and 2, or 11 and 12, corresponding to a lateral end of the applicator roller. In some examples, this may allow the applicator roller to compact the respective portion, for example because the applicator roller may be more readily deformable at its lateral ends, or because the orientation of the applicator head 14 can be inclined based on the normal vector of the respective portion of the substrate surface so that the distal line or surface of the applicator roller better corresponds to the profile of the substrate surface. Correspondingly, other portions of a headpath, such as laterally adjacent positions, may be offset.

The term "production headpath data" is used herein to refer to headpath data that may be used in a manufacturing process, i.e. after validation processes. For the avoidance of doubt, the above descriptions of the definition of production headpath data based on baseline headpath data do not exclude such processes having further intermediate steps, for example, further checks and optimisations to be performed on the headpath positions and the lateral extent of fibre reinforcement material to be applied.

Although specific examples have been described herein with respect to applying fibre reinforcement in the form of a plurality of laterally adjacent tows (Automatic Fibre Placement, AFP), it will be appreciated that other examples methods may be based on applying fibre reinforcement tapes (Automatic Tape Laying, ATL), or a bundle of fibres (automatic filament winding).

It will be appreciated that the methods described herein with respect to Figures 3-11 may be implemented in a computer, such as a general purpose computer, or in an apparatus comprising a controller configured to implement the methods.

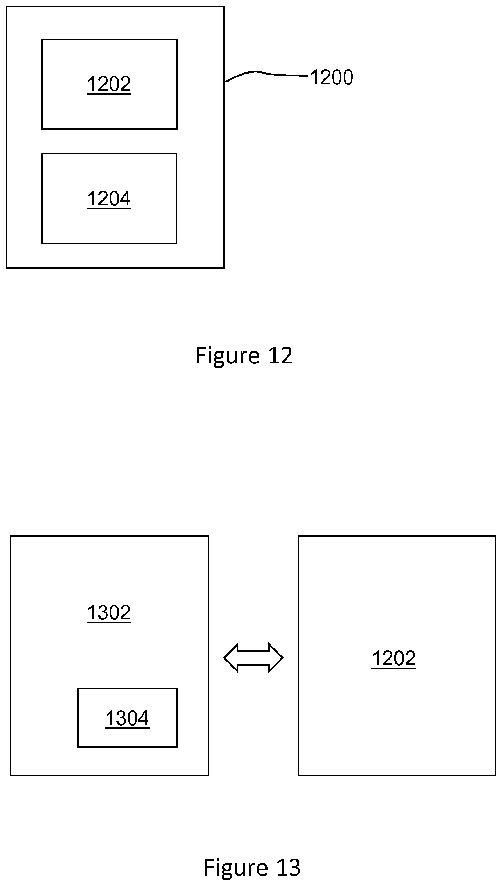

An example controller 1200 is shown, by way of an example, in **Figure** 12. In this example, the controller comprises at least one processor 1202 and at least one memory 1204. The memory 1204 stores a computer program comprising computer readable instructions that, when read by the processor, causes performance of at least one of the methods described herein with respect to Figures 6-7 and 10-11. The computer program may be software or firmware, or may be a combination of software and firmware.

The processor 1202 may include at least one microprocessor and may comprise a single core processor, may comprise multiple processor cores (such as a dual core processor or a quad core processor), or may comprise a plurality of processors (at least one of which may comprise multiple processor cores).

The memory 1204 may be any suitable non-transitory computer readable storage medium, data storage device or devices, and may comprise a hard disk and/or solid state memory (such as flash memory). The memory 1204 may be permanent nonremovable memory, or may be removable memory (such as a universal serial bus (USB) flash drive).

As shown in Figure 13, a computer program 1304 may be stored on a non-transitory computer readable storage medium 1302. The computer program may be executable by a processor 1202 to cause performance of at least one of the methods described herein with respect to Figures 6-7 and 10-11. The computer program 1304 may be transferred from the non-transitory computer readable storage medium 1302 to the memory 1204 of Figure 12. The non-transitory computer readable storage medium 1302 may be, for example, a USB flash drive, a compact disc (CD), a digital versatile disc (DVD) or a Blu-ray disc. In some examples, the computer program may be transferred to the memory via a wireless signal or via a wired signal.

Further, the computer program comprising computer readable-instructions may be transmitted by a signal that, when executed by a processor, causes the performance of at least one of the methods described herein with respect to Figures 6-7 and 10-11.

It will be understood that the invention is not limited to the examples above-described and various modifications and improvements can be made within the scope of the appended claims, that define the invention.

**Claims**

1. A computer-implemented method (600) of checking headpath data for a layup operation in which fibre reinforcement material is applied over a tool (10) by an applicator roller (20) of an applicator head (14) biased against the tool (10) along a compaction axis (22) by a compaction force, the applicator head (14) being mounted on a support by a resilient mount so that it is translatable with respect to the resilient mount along the compaction axis (22), the method comprising:

receiving baseline headpath data (602) defining a baseline headpath position of the applicator head (14) relative the tool (10) for applying fibre reinforcement material onto a substrate surface (102) by the applicator roller (20); determining a head displacement (604, 704) relative to the respective headpath positions along the compaction axis (22) corresponding to an equilibrium condition between the compaction force and a reaction force through the fibre reinforcement material applied by the applicator roller (20); and

checking (606, 706) for at least one of:

a non-compacted portion of fibre reinforcement material along a lateral extent of the applicator roller (20) based on a deformation profile of the applicator roller (20) at the equilibrium condition; and an intersection of the applicator head (14) and an obstacle, based on the head displacement distance.

2. A method (600) according to claim 1, further comprising:

   determining an intersection (1002) of the applicator head in the baseline headpath position and an obstacle;
   defining an offset headpath position (1004) offset from the baseline headpath position to avoid the intersection; and
   defining production headpath data (1006) for a layup operation including the offset headpath position.

3. A method (600) according to claim 1, further comprising

   determining a non-compacted portion (604, 704) of fibre reinforcement material based on the deformation profile (104) of the applicator roller (20) at the equilibrium condition;
   defining (1004) an offset headpath position offset from the baseline headpath position based on the location of the non-compacted portion to laterally offset a centre of the applicator roller (20) from a position on the substrate surface (102) corresponding to the non-compacted portion; and
   defining (1006) production headpath data for a layup operation including the offset headpath position.

4. A method (600) according to claim 2 or 3, further comprising repeating checking for a non-compacted portion (706) of fibre reinforcement material and/or an intersection of the applicator head (20) and an obstacle at the offset headpath position.

5. A method (600) according to any preceding claim, further comprising:

   determining a non-compacted portion (1102) of fibre reinforcement material based on the deformation profile (104) of the applicator roller (20) at the equilibrium condition; and
   defining production headpath data (1104) for a layup operation including the baseline headpath position, wherein the production headpath data defines a reduced lateral extent of fibre reinforcement to be applied at the baseline headpath position to exclude the non-compacted portion.

6. A method (600) according to claim 4 or 5, wherein the production headpath data is defined for a layup operation in which a plurality of laterally-adjacent tows are applied by the applicator roller (20), wherein at least one tow is determined to be non-compacted based on the deformation profile (104) of the applicator roller at the equilibrium condition; and wherein the production headpath data is defined (1104) to exclude at least one tow at the baseline headpath position.

7. A method (600) according to any preceding claim, wherein a non-compacted portion is determined when a corresponding portion of the deformation profile (104) of the applicator roller is non-physical, or when a reaction force through the corresponding portion of the deformation profile (104) is below a predetermined threshold.

8. A method (600) according to any preceding claim, wherein the deformation profile (104) at the equilibrium condition is determined by mapping the lateral profile of the applicator roller to the substrate surface (102).

9. A method (600) according to claim 8, wherein the equilibrium condition is resolved to determine the head displacement by determining the reaction force through the fibre reinforcement material as a function of the deformation profile (104).

10. A method (600) according to claim 9, wherein the reaction force through the fibre reinforcement material is determined (712) based on an iteratively-adjusted compaction profile defining regions of compaction of the fibre reinforcement material by the applicator roller along the lateral extent of the applicator roller, and wherein the compaction profile is iteratively adjusted (708) to exclude regions of non-physical deformation of the applicator roller (20) to compact the fibre reinforcement material.

11. A method (600) according to claim 9 or 10, wherein the reaction force through the fibre reinforcement material is determined (712) based on a correlation between deformation of the applicator roller (20) and the reaction force which varies laterally along the applicator roller (20).

12. A method (600) of defining headpath data including a plurality of headpath positions defining a headpath of relative movement of an applicator head (20) relative a tool (10) to apply fibre reinforcement material onto a substrate surface (102) by an applicator roller (20) of the applicator head (14); and

wherein the headpath data for at least one of the headpath positions is checked and defined in accordance with claim 5 or 6, so that a lateral extent of fibre-reinforcement material to be applied varies along the headpath.

**13.** A non-transitory computer-readable storage medium comprising computer-readable instructions that, when executed by a processor, causes performance of a method (600) in accordance with any preceding claim.

**14.** A computer program that, when read by a computer, causes performance of a method (600) in accordance with any of claims 1-12.

**15.** An apparatus comprising:

at least one processor (1202);
at least one memory (1204) comprising computer-readable instructions;
the at least one processor (1202) being configured to read the computer readable instructions and cause performance of a method (600) in accordance with any of claims 1-12.


**Patentansprüche**

**1.** Computerimplementiertes Verfahren (600) zum Überprüfen von Kopfwegdaten für einen Laminierungsvorgang, bei dem Faserverstärkungsmaterial durch eine Auftragwalze (20) eines Auftragkopfes (14), der entlang einer Verdichtungsachse (22) durch eine Verdichtungskraft gegen ein Werkzeug (10) vorgespannt ist, über das Werkzeug (10) aufgetragen wird, wobei der Auftragkopf (14) durch eine elastische Halterung an einem Träger montiert ist, sodass er in Bezug auf die elastische Halterung entlang der Verdichtungsachse (22) verschiebbar ist, wobei das Verfahren Folgendes umfasst:

Empfangen von Ausgangskopfwegdaten (602), die eine Ausgangskopfwegposition des Auftragkopfes (14) relativ zu dem Werkzeug (10) zum Auftragen von Faserverstärkungsmaterial auf eine Substratoberfläche (102) durch die Auftragwalze (20) definieren;
Bestimmen einer Kopfverschiebung (604, 704) relativ zu den jeweiligen Kopfwegpositionen entlang der Verdichtungsachse (22) entsprechend einem Gleichgewichtszustand zwischen der Verdichtungskraft und einer Reaktionskraft durch das Faserverstärkungsmaterial, das durch die Auftragwalze (20) aufgetragen wird; und
Überprüfen (606, 706) auf mindestens eines von Folgenden:

einen nicht verdichteten Abschnitt des Faserverstärkungsmaterials entlang einer seitlichen Erstreckung der Auftragwalze (20) auf Grundlage eines Verformungsprofils der Auftragwalze (20) im Gleichgewichtszustand; und
einen Schnittpunkt des Auftragkopfes (14) und eines Hindernisses auf Grundlage des Kopfverschiebungsabstands.

**2.** Verfahren (600) nach Anspruch 1, ferner umfassend:

Bestimmen eines Schnittpunkts (1002) des Auftragkopfes in der Ausgangskopfwegposition und eines Hindernisses;
Definieren einer versetzten Kopfwegposition (1004), die von der Ausgangskopfwegposition versetzt ist, um den Schnittpunkt zu umgehen; und
Definieren von Produktionskopfwegdaten (1006) für einen Laminierungsvorgang, einschließlich der versetzten Kopfwegposition.

**3.** Verfahren (600) nach Anspruch 1, ferner umfassend:

Bestimmen eines nicht verdichteten Abschnitts (604, 704) des Faserverstärkungsmaterials auf Grundlage des Verformungsprofils (104) der Auftragwalze (20) im Gleichgewichtszustand;
Definieren (1004) einer versetzten Kopfwegposition, die von der Ausgangskopfwegposition versetzt ist, auf Grundlage der Lage des nicht verdichteten Abschnitts, um einen Mittelpunkt der Auftragwalze (20) von einer Position auf der Substratoberfläche (102), die dem nicht verdichteten Abschnitt entspricht, seitlich zu versetzen; und
Definieren (1006) von Produktionskopfwegdaten für einen Laminierungsvorgang, einschließlich der versetzten Kopfwegposition.

4. Verfahren (600) nach Anspruch 2 oder 3, ferner umfassend Wiederholen der Überprüfung auf einen nicht verdichteten Abschnitt (706) des Faserverstärkungsmaterials und/oder einen Schnittpunkt des Auftragkopfes (20) und eines Hindernisses an der versetzten Kopfwegposition.

5. Verfahren (600) nach einem vorhergehenden Anspruch, ferner umfassend:

Bestimmen eines nicht verdichteten Abschnitts (1102) des Faserverstärkungsmaterials auf Grundlage des Verformungsprofils (104) der Auftragwalze (20) im Gleichgewichtszustand; und
Definieren von Produktionskopfwegdaten (1104) für einen Laminierungsvorgang, einschließlich der Ausgangskopfwegposition, wobei die Produktionskopfwegdaten eine reduzierte seitliche Erstreckung der Faserverstärkung definieren, die an der Ausgangskopfwegposition aufzutragen ist, um den nicht verdichteten Abschnitt auszuschließen.

6. Verfahren (600) nach Anspruch 4 oder 5, wobei die Produktionskopfwegdaten für einen Laminierungsvorgang definiert werden, bei dem eine Vielzahl von seitlich benachbarten Strängen durch die Auftragwalze (20) aufgetragen werden, wobei für mindestens einen Strang auf Grundlage des Verformungsprofils (104) der Auftragwalze im Gleichgewichtszustand bestimmt wird, dass er nicht verdichtet ist; und wobei die Produktionskopfwegdaten definiert werden (1104), um mindestens einen Strang an der Ausgangskopfwegposition auszuschließen.

7. Verfahren (600) nach einem vorhergehenden Anspruch, wobei ein nicht verdichteter Abschnitt bestimmt wird, wenn ein entsprechender Abschnitt des Verformungsprofils (104) der Auftragwalze nicht physisch ist oder wenn eine Reaktionskraft durch den entsprechenden Abschnitt des Verformungsprofils (104) unter einem vorbestimmten Schwellenwert liegt.

8. Verfahren (600) nach einem vorhergehenden Anspruch, wobei das Verformungsprofil (104) im Gleichgewichtszustand durch Abbilden des seitlichen Profils der Auftragwalze auf die Substratoberfläche (102) bestimmt wird.

9. Verfahren (600) nach Anspruch 8, wobei die Gleichgewichtsbedingung aufgelöst wird, um die Kopfverschiebung zu bestimmen, indem die Reaktionskraft durch das Faserverstärkungsmaterial als Funktion des Verformungsprofils (104) bestimmt wird.

10. Verfahren (600) nach Anspruch 9, wobei die Reaktionskraft durch das Faserverstärkungsmaterial auf Grundlage eines iterativ angepassten Verdichtungsprofils bestimmt wird (712), das Verdichtungsbereiche des Faserverstärkungsmaterials durch die Auftragwalze entlang der seitlichen Erstreckung der Auftragwalze definiert, und wobei das Verdichtungsprofil iterativ angepasst wird (708), um Bereiche mit nicht physikalischer Verformung der Auftragwalze (20) auszuschließen, um das Faserverstärkungsmaterial zu verdichten.

11. Verfahren (600) nach Anspruch 9 oder 10, wobei die Reaktionskraft durch das Faserverstärkungsmaterial auf Grundlage einer Korrelation zwischen der Verformung der Auftragwalze (20) und der Reaktionskraft, die seitlich entlang der Auftragwalze (20) variiert, bestimmt wird (712).

12. Verfahren (600) zum Definieren von Kopfwegdaten, einschließlich einer Vielzahl von Kopfwegpositionen, die einen Kopfweg der relativen Bewegung eines Auftragkopfes (20) relativ zu einem Werkzeug (10) definieren, um Faserverstärkungsmaterial auf eine Substratoberfläche (102) durch eine Auftragwalze (20) des Auftragkopfes (14) aufzutragen; und
wobei die Kopfwegdaten für mindestens eine der Kopfwegpositionen gemäß Anspruch 5 oder 6 definiert und überprüft werden, sodass eine seitliche Erstreckung des aufzutragenden Faserverstärkungsmaterials entlang des Kopfwegs variiert.

13. Nicht transitorisches computerlesbares Speichermedium, das computerlesbare Anweisungen umfasst, die, wenn sie durch einen Prozessor ausgeführt werden, die Durchführung eines Verfahrens (600) nach einem vorhergehenden Anspruch bewirken.

14. Computerprogramm, das, wenn es von einem Computer gelesen wird, die Durchführung eines Verfahrens (600) nach einem der Ansprüche 1-12 bewirkt.

**15.** Vorrichtung, umfassend:

mindestens einen Prozessor (1202);
mindestens einen Speicher (1204), der computerlesbare Anweisungen umfasst;
wobei der mindestens eine Prozessor (1202) dazu konfiguriert ist, die computerlesbaren Anweisungen zu lesen und die Durchführung eines Verfahrens (600) nach einem der Ansprüche 1-12 zu bewirken.

**Revendications**

**1.** Procédé mis en oeuvre par ordinateur (600) de vérification des données de trajet de tête pour une opération d'empilement dans laquelle un matériau de renforcement fibreux est appliqué sur un outil (10) par un rouleau applicateur (20) d'une tête applicatrice (14) sollicitée contre l'outil (10) le long d'un axe de compactage (22) par une force de compactage, la tête applicatrice (14) étant montée sur un support par un dispositif de montage élastique afin qu'elle puisse être translatée par rapport au dispositif de montage élastique le long de l'axe de compactage (22), le procédé comprenant :

la réception des données de trajet de tête de ligne de base (602) définissant une position de trajet de tête de ligne de base de la tête applicatrice (14) par rapport à l'outil (10) en vue de l'application d'un matériau de renforcement fibreux sur une surface de substrat (102) par le rouleau applicateur (20) ;
la détermination d'un déplacement de tête (604, 704) par rapport aux positions respectives de trajet de tête le long de l'axe de compactage (22) correspondant à une condition d'équilibre entre la force de compactage et une force de réaction à travers le matériau de renforcement fibreux appliqué par le rouleau applicateur (20) ;
et la vérification (606, 706) pour au moins l'un parmi :

une partie non compactée de matériau de renforcement fibreux le long d'une étendue latérale du rouleau applicateur (20) sur la base d'un profil de déformation du rouleau applicateur (20) à l'état d'équilibre ; et
une intersection de la tête applicatrice (14) et d'un obstacle, sur la base de la distance de déplacement de tête.

**2.** Procédé (600) selon la revendication 1, comprenant en outre :

la détermination d'une intersection (1002) de la tête applicatrice dans la position de trajet de tête de ligne de base et un obstacle ;
la définition d'une position de trajet de tête décalée (1004) qui est décalée de la position de trajet de tête de ligne de base pour éviter l'intersection ; et
la définition des données de trajet de tête de production (1006) pour une opération d'empilement comprenant la position de trajet de tête décalée.

**3.** Procédé (600) selon la revendication 1, comprenant en outre

la détermination d'une partie non compactée (604, 704) de matériau de renforcement fibreux sur la base du profil de déformation (104) du rouleau applicateur (20) à la condition d'équilibre ;
la définition (1004) d'une position de trajet de tête décalée par rapport à la position de trajet de tête de ligne de base sur la base de l'emplacement de la partie non compactée pour décaler latéralement un centre du rouleau applicateur (20) d'une position sur la surface de substrat (102) correspondant à la partie non compactée ; et
la définition (1006) des données de trajet de tête de production pour une opération d'empilement comprenant la position de trajet de tête décalée.

**4.** Procédé (600) selon la revendication 2 ou 3, comprenant en outre la répétition de la vérification d'une partie non compactée (706) de matériau de renforcement fibreux et/ou d'une intersection de la tête applicatrice (20) et d'un obstacle au niveau de la position de trajet de tête décalée.

**5.** Procédé (600) selon une quelconque revendication précédente, comprenant en outre :

la détermination d'une partie non compactée (1102) de matériau de renforcement fibreux sur la base du profil de déformation (104) du rouleau applicateur (20) à l'état d'équilibre ; et
la définition des données de trajet de tête de production (1104) pour une opération d'empilement comprenant la position de trajet de tête de ligne de base, lesdites données de trajet de tête de production définissant une étendue latérale réduite de renforcement fibreux à appliquer au niveau de la position de trajet de tête de ligne de base pour exclure la partie non compactée.

6. Procédé (600) selon la revendication 4 ou 5, lesdites données de trajet de tête de production étant définies pour une opération d'empilement dans laquelle une pluralité de câbles latéralement adjacents sont appliqués par le rouleau applicateur (20), au moins un câble étant déterminé pour être non compacté sur la base du profil de déformation (104) du rouleau applicateur à l'état d'équilibre ; et lesdites données de trajet de tête de production étant définies (1104) pour exclure au moins un câble au niveau de la position de trajet de tête de ligne de base.

7. Procédé (600) selon une quelconque revendication précédente, une partie non compactée étant déterminée lorsqu'une partie correspondante du profil de déformation (104) du rouleau applicateur n'est pas physique, ou lorsqu'une force de réaction à travers la partie correspondante du profil de déformation (104) est inférieur à un seuil prédéfini.

8. Procédé (600) selon une quelconque revendication précédente, ledit profil de déformation (104) à la condition d'équilibre étant déterminé en mettant en correspondance le profil latéral du rouleau applicateur avec la surface de substrat (102).

9. Procédé (600) selon la revendication 8, ladite condition d'équilibre étant résolue pour déterminer le déplacement de tête en déterminant la force de réaction à travers le matériau de renforcement fibreux en fonction du profil de déformation (104).

10. Procédé (600) selon la revendication 9, ladite force de réaction à travers le matériau de renforcement fibreux étant déterminée (712) sur la base d'un profil de compactage réglé de manière itérative définissant des zones de compactage du matériau de renforcement fibreux par le rouleau applicateur le long de l'étendue latérale du rouleau applicateur, et ledit profil de compactage étant réglé de manière itérative (708) pour exclure les zones de déformation non physique du rouleau applicateur (20) pour compacter le matériau de renforcement fibreux.

11. Procédé (600) selon la revendication 9 ou 10, ladite force de réaction à travers le matériau de renforcement fibreux étant déterminée (712) sur la base d'une corrélation entre la déformation du rouleau applicateur (20) et la force de réaction qui varie latéralement le long du rouleau applicateur (20).

12. Procédé (600) de définition de données de trajet de tête comprenant une pluralité de positions de trajet de tête définissant un trajet de tête de mouvement relatif d'une tête applicatrice (20) par rapport à un outil (10) pour appliquer un matériau de renforcement fibreux sur une surface de substrat (102) par un rouleau applicateur (20) de la tête applicatrice (14) ; et lesdites données de trajet de tête pour au moins l'une des positions de trajet de tête étant vérifiées et définies conformément à la revendication 5 ou 6, afin qu'une étendue latérale de matériau de renforcement fibreux à appliquer varie le long du trajet de tête.

13. Support de stockage lisible par ordinateur non transitoire comprenant des instructions lisibles par ordinateur qui, lorsqu'elles sont exécutées par un processeur, amènent un procédé (600) à être réalisé selon une quelconque revendication précédente.

14. Programme informatique qui, lorsqu'il est lu par un ordinateur, amène un procédé (600) à être réalisé selon l'une quelconque des revendications 1 à 12.

15. Appareil comprenant :

   au moins un processeur (1202) ;
   au moins une mémoire (1204) comprenant des instructions lisibles par ordinateur ;
   ledit au moins un processeur (1202) étant configuré pour lire les instructions lisibles par ordinateur et amener un procédé (600) à être réalisé selon l'une quelconque des revendications 1 à 12.

Figure 1

Figure 2

Figure 3

Figure 4

Figure 5

600

Receive baseline
headpath data — 602

Determine head
displacement — 604

Check — 606

Figure 6

604

Map roller profile to
substrate surface
(assume all tows in
contact) —— 702

Calculate head
displacement D —— 704

Exclude tows not in
contact (amend
compaction profile) —— 708

706 —— Check for non-
physical
deformation

710 —— Determine
deformation profile

712 —— Determine reaction
force *Ri* through
tows

Figure 7

Figure 8

Figure 9

1000

602 — Receive baseline headpath data

604 — Determine head displacement ← Define offset headpath position — 1004

606 — Check → Determine intersect — 1002

Define production headpath data — 1006

Figure 10

1100

602 — Receive baseline headpath data

604 — Determine head displacement

606 — Check → Determine non-compaction — 1102

Define production headpath data with reduced fibre to be applied — 1104

Figure 11

1202

1204

—1200

Figure 12

1302

1304

⟷

1202

Figure 13

**EP 3 332 949 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1785261 A